# EUROPEAN PATENT APPLICATION

(11) **EP 4 654 600 A1**
(43) Date of publication of application: **26.11.2025**
(21) Application number: 23951219.7
(22) Date of filing: 08.09.2023
(51) Int. Cl.: H04N 23/69, H04N 23/81

(54) **IMAGE PROCESSING METHOD AND ELECTRONIC DEVICE**

(71) Applicant: Honor Device Co., Ltd., Shenzhen, Guangdong 518040 (CN)
(72) Inventor: DING, Dajun, Shenzhen, Guangdong 518040 (CN); ZHANG, Wenhong, Shenzhen, Guangdong 518040 (CN); YING, Guohao, Shenzhen, Guangdong 518040 (CN); SHAO, Tao, Shenzhen, Guangdong 518040 (CN); XIAO, Bin, Shenzhen, Guangdong 518040 (CN); WANG, Yu, Shenzhen, Guangdong 518040 (CN); ZHU, Congchao, Shenzhen, Guangdong 518040 (CN)
(74) Representative: Thun, Clemens
(86) International application number: PCT/CN2023/117828
(87) International publication number: WO 2025/050400

(57) **Abstract**

This application provides an image processing method and an electronic device. In an electronic device provided with an image sensor with a high pixel array, an image processing method performed by the electronic device includes the following steps: Firstly, a raw (RAW) image captured by the image sensor is preprocessed in a RAW domain based on a target zoom ratio and illuminance, to obtain a preprocessed image in a target pixel format. Then, magnification and cropping are performed on the preprocessed image in any one or more of a RAW domain, an RGB domain, and a YUV domain based on the target zoom ratio and a target dimension, to obtain a high-quality image of the target dimension at the target zoom ratio.

## Description

### TECHNICAL FIELD

This application relates to the field of a terminal, and in particular, to an image processing method and an electronic device.

### BACKGROUND

Currently, electronic devices support more and more shooting modes, such as support capturing images at different zoom ratios. How to process a captured raw image so as to output a high-quality image at a corresponding zoom ratio is a problem to be urgently resolved.

### SUMMARY

This application provides an image processing method and an electronic device. In an electronic device provided with an image sensor with a high pixel array, the electronic device may perform zoom processing on a raw image that is captured by the image sensor and is at an original zoom ratio, to obtain an image at a target zoom ratio. Specifically, firstly, a raw (RAW) image is preprocessed in a RAW domain based on a target zoom ratio and illuminance, to obtain a preprocessed image in a target pixel format. Then, magnification and cropping are performed on the preprocessed image in any one or more of a RAW domain, an RGB domain, and a YUV domain based on the target zoom ratio and a target dimension, to obtain a high-quality image of the target dimension at the target zoom ratio.

According to a first aspect, this application provides an image processing method. The method is applied to an electronic device including an image sensor, and the method includes: acquiring a raw image by using the image sensor, a zoom ratio of the raw image being greater than 1×; performing K×K pixel binning on the raw image at the zoom ratio based on a preset policy, to obtain a first image, K≥1; where the preset policy includes: when a target zoom ratio is in a first range, K=K1; when the target zoom ratio is in a second range and the illuminance is first illuminance, K=K2; when the target zoom ratio is in a second range and the illuminance is second illuminance, K=K3; a minimum value in the second range is greater than a maximum value in the first range, the first illuminance is greater than the second illuminance, and K2<K3≤K1; and magnifying the first image to obtain a second image at the target zoom ratio.

After the method provided in the first aspect is implemented, pixel binning may be performed on the raw image with reference to a target zoom ratio and illuminance that are selected by a user, so that anti-noise performance of the image is improved and preliminary zoom ratio processing is performed on the raw image, and then a high-quality image at the target zoom ratio is obtained after further zooming is performed based on the preliminary zoom ratio processing.

In this application, a zoom ratio corresponding to the raw image outputted by the image sensor is greater than 1×, and the zoom ratio corresponding to the raw image is a shooting parameter that is set before delivery of the electronic device. The target zoom ratio is a shooting parameter selected by the user or used by the electronic device by default in a shooting scenario. The target zoom ratio may be greater than, less than, or equal to the zoom ratio of the raw image. Therefore, in the image processing method provided in this application, the zoom ratio of the raw image needs to be processed as the target zoom ratio. When the zoom ratio of the raw image is N× and the target zoom ratio is Z, the image processing specifically includes: performing K×K pixel binning on the raw image at the zoom ratio of N× based on a preset policy to obtain a first image at a zoom ratio of N/K×, and then magnifying the first image by Z/(N/K)× based on the first image at the zoom ratio of N/K× to obtain an image at the target zoom ratio.

With reference to the method provided in the first aspect, the preset policy further includes: when the target zoom ratio is in a third range, if the illuminance is third illuminance, K=K4, if the illuminance is fourth illuminance, K=K5, and if the illuminance is fifth illuminance, K=K6; and the third range is greater than the second range, the third illuminance is greater than the fourth illuminance, the fourth illuminance is greater than the fifth illuminance, and K4<K5<K6≤K1.

In this way, the target zoom ratio is divided into a plurality of ranges, and a more precise preset policy is further formulated according to a range of magnitude of the target zoom ratio and with reference to illuminance, thereby further improving zooming efficiency and ensuring quality of an image after zooming.

With reference to the method provided in the first aspect, after the obtaining a first image, the method further includes: converting the first image from a RAW domain into an RGB domain or a YUV domain by using a neural network; and the magnifying the first image specifically includes magnifying the first image at any one or more of the following stages: before, during, and after domain conversion on the first image by using the neural network.

In this way, the image may be magnified in any one or more of a plurality of stages according to a magnification requirement, to obtain the image at the target zoom ratio, thereby improving implementability of the image processing method.

With reference to the method provided in the first aspect, multi-stage magnification is performed on the first image by using more stages when the target zoom ratio is larger.

In this way, a larger target zoom ratio may require a higher image magnification factor. Therefore, by using multi-stage magnification, stability of a magnification effect can be ensured, and difficulty in magnification in only one stage can be reduced.

With reference to the method provided in the first aspect, the magnifying the first image before domain conversion on the first image by using the neural network includes: magnifying the first image by using the image sensor, and/or magnifying the first image by using an algorithm.

In this way, a hardware magnification capability of the image sensor and a software magnification capability of the electronic device can be fully used. The hardware magnification capability of the image sensor may be, for example, in-sensor zoom, and the software magnification capability may be, for example, an upsampling algorithm or super-resolution.

With reference to the method provided in the first aspect, a pixel format of the raw image is N×N Quad-Bayer, and a pixel format corresponding to the first image is M×M Quad-Bayer, where N≥M, N>1, and M≥1.

In this way, after the pixel format of the raw image is converted, an image with better anti-noise performance can be obtained, enabling output of a clear image even under extreme low illuminance.

With reference to the method provided in the first aspect, the zoom ratio of the raw image is N×, and a zoom ratio of the first image is N/K×.

In this way, preliminary lossless zoom processing may be performed on the raw image according to the preset policy.

With reference to the method provided in the first aspect, the first image is magnified when the target zoom ratio is Z, specifically including: magnifying the first image by C×, C=Z/(N/K).

In this way, based on the preliminary lossless zoom processing, an image at the target zoom ratio can be obtained through magnification.

With reference to the method provided in the first aspect, before the obtaining a second image, the method further includes: cropping the first image before or after the first image is magnified.

In this way, an image having the target dimension and selected by the user can be obtained.

With reference to the method provided in the first aspect, before the performing K×K pixel binning on the raw image based on a preset policy, the method further includes: detecting the illuminance by using an optical sensor of the electronic device, or acquiring the illuminance by using an exposure parameter of the image sensor.

In this way, illuminance in a to-be-shot scenario can be obtained in various manners, thereby improving implementability of this solution.

With reference to the method provided in the first aspect, before the performing K×K pixel binning on the raw image based on a preset policy, the method further includes: receiving a first operation, and setting a zoom ratio of the electronic device to the target zoom ratio in response to the first operation.

In this way, the raw image may be processed based on the target zoom ratio selected by the user, to obtain a high-quality image at the target zoom ratio and selected by the user.

With reference to the method provided in the first aspect, the method further includes: displaying a preview interface, and displaying the second image in the preview interface.

In this way, the image processing method may also be applied in an image preview scenario, to ensure a preview effect.

With reference to the method provided in the first aspect, the raw image includes a plurality of frames of images, and the first image is: a frame of image obtained by fusing the plurality of frames of images on which K×K pixel binning is performed based on the preset policy; and the method further includes: receiving a photographing operation before the performing K×K pixel binning on the raw image based on a preset policy; and saving the second image, displaying a gallery interface, and displaying the second image in the gallery interface.

In this way, in a shooting scenario, fusion processing may further be performed on a plurality of frames of images processed by the preset policy, so that photo quality can be further improved during zoom processing.

According to a second aspect, this application provides an electronic device, the electronic device including an image sensor, one or more memories, and one or more processors; where the memory is coupled to the one or more processors, the memory is configured to store a computer program code, the computer program code includes a computer instruction, and the one or more processors call the computer instruction to cause the electronic device to perform the method as described in any one of the first aspect.

According to a third aspect, this application provides a computer-readable storage medium, including an instruction, where when the instruction is run on an electronic device, the electronic device is caused to perform the method as described in any one of the first aspect.

According to a fourth aspect, this application provides a chip, the chip being applied to an electronic device, where the chip includes one or more processors, and the processor is configured to call computer instructions to cause the electronic device to perform the method as described in any one of the first aspect.

According to a fifth aspect, this application provides a computer program product including instructions, where when the computer program product is run on an electronic device, the electronic device is caused to perform the method as described in any one of the first aspect.

### BRIEF DESCRIPTION OF DRAWINGS

FIG. 1 is a schematic diagram of an image processing flow in a preview channel according to an embodiment of this application;
FIG. 2 is a schematic diagram of an image processing flow in a shooting channel according to an embodiment of this application;
FIG. 3 is a flowchart of an image processing method according to an embodiment of this application;
FIG. 4 is a schematic diagram of multiple pixel formats and conversion relationships thereof according to an embodiment of this application;
FIG. 5 is a schematic diagram of image dimension conversion relationships corresponding to pixel format conversion according to an embodiment of this application;
FIG. 6 is a schematic flowchart of an image output policy involved in an image processing method according to this application;
FIG. 7 is a schematic diagram of a specific image output policy implementation method according to this application;
FIG. 8 is a schematic diagram of a hardware architecture of an electronic device according to this application; and
FIG. 9 is a schematic diagram of a system architecture of an electronic device according to this application.

### DESCRIPTION OF EMBODIMENTS

The following clearly and thoroughly describes technical solutions in embodiments of this application with reference to the accompanying drawings. In the descriptions of embodiments of this application, "/" means "or" unless otherwise specified. For example, A/B may indicate A or B. The expression "and/or" herein indicates only an association relationship for describing associated objects and indicates that three relationships may exist. For example, A and/or B may indicate A alone, both A and B, and B alone.

The terms "first" and "second" mentioned below are merely intended for a purpose of description, and cannot be understood as an indication or implication of relative importance or implicit indication of the quantity of indicated technical features. Therefore, a feature limited by "first" and "second" may explicitly or implicitly include one or more features. In the descriptions of embodiments of this application, unless otherwise specified, "a plurality of" means two or more.

"Embodiment" mentioned in this application means that particular features, structures, or characteristics described with reference to the embodiment may be included in at least one embodiment of this application. The phrase appearing in various places in the specification does not necessarily refer to a same embodiment or an independent or alternative embodiment that is exclusive of other embodiments. It is explicitly or implicitly understood by a person skilled in the art that the embodiments described in this application may be combined with other embodiments.

The term "user interface (user interface, UI)" in the following embodiments of this application is a medium interface for interaction and information exchange between an application or operating system and a user, and implements conversion between an internal form of information and a form acceptable to the user. The user interface is source code written in a specific computer language such as java and an extensible markup language (extensible markup language, XML). Interface source code is parsed and rendered on an electronic device, and is finally presented as content that can be recognized by the user. A commonly used form of the user interface is a graphical user interface (graphic user interface, GUI), which refers to a user interface that is related to a computer operation and is displayed graphically. The graphic user interface may be visible interface elements such as text, an icon, a button, a menu, a tab, a text box, a dialog box, a status bar, a navigation bar, and a Widget that are displayed on a display screen of the electronic device.

First, several related concepts involved in embodiments of this application are introduced.

**A zoom ratio** (Zoom), also referred to as a magnification ratio, is a shooting parameter of an electronic device, which specifically refers to a multiple of a standard focal length of the electronic device. The standard focal length may be a focal length supported by a camera (a main camera or a wide-angle camera) having a fixed focal length, or one of focal lengths supported by a tele camera. A larger zoom ratio indicates a larger magnification factor of a captured image.

**Digital zoom** means that without changing the focal length of the camera, the image captured by the camera is upsampled, super-resolution processed, and the like, to achieve an effect similar to that of changing the focal length.

**Optical zooming** includes two manners. In the first manner, when the electronic device is equipped with multiple cameras using different focal lengths or focal segments, zooming is implemented by using a solution in which a plurality of cameras relay. That is, switching is performed between a plurality of cameras with different focal lengths, that is, cameras with different focal lengths are used to capture a preview stream for display. In the second manner, when there is a tele camera, the tele camera is zoomed in or out, so that the tele camera captures a preview stream at different positions (at different focal lengths) for display. A first optical zooming method relates to switching between cameras, which may cause interruption of a displayed preview stream. In a second optical zooming method, a smooth and continuous zooming process may be implemented by controlling a fixed camera to be zoomed in or out to change a focal length, that is, the preview stream may not be interrupted.

According to the electronic device provided in this application, images may be captured under different zoom ratios by optical zooming and/or digital zooming, and in particular, images may be captured under different zoom ratios by digital zooming. Regardless of digital zooming or optical zooming, a similarity therebetween is as follows: When the zoom ratio decreases, dimensions of a preview image displayed in a preview interface of the electronic device and an image captured in a gallery do not change, but effects of a larger field of view and more and smaller image content are achieved. Correspondingly, when the zoom ratio increases, the dimensions of the preview image displayed in the preview interface of the electronic device and the image captured in the gallery do not change, but the preview image shows effects of a smaller field of view and less and larger image content. However, a difference therebetween is as follows: Only the optical zooming can support non-reduction in pixels, that is, image content is enlarged but an image is still clear. However, the digital zooming reduces pixels, that is, image content is enlarged but image definition is reduced.

**A color space** includes, but is not limited to, a trichromatic color space, abbreviated as (RGB), and a luminance-and-chrominance color space, abbreviated as (YUV). **RGB** is a color space in which colors are described by using three primary colors, i.e., Red, Green, and Blue, R=Red, G=Green, and B=Blue, and RGB focuses on sensitivity of human eyes to colors. **YUV** is a color space in which colors are described by using luminance and chrominance, the luminance is referred to as Y, the chrominance is formed by two signals that are independent of each other, that is, U and V, and YUV focuses on visual sensitivity to the luminance. In this embodiment of this application, RGB and YUV are mutually convertible according to a requirement.

**A pixel format** refers to an arrangement format of a pixel array. When an arrangement format of a pixel array set in the image sensor is different, a pixel format of a raw image outputted by the image sensor varies. In addition, pixel format conversion may also be performed on the raw image in the RAW domain to obtain an image in another pixel format.

The pixel format includes, but is not limited to, a Bayer format and a Quad-Bayer format. The pixel format in this application is for an image in a raw field (RAW field), not for an RGB field/YUV field processed image format obtained after conversion.

A pixel format conversion technology includes, but is not limited to, a pixel binning technology (also referred to as Binning), a Remosaic technology, and the like.

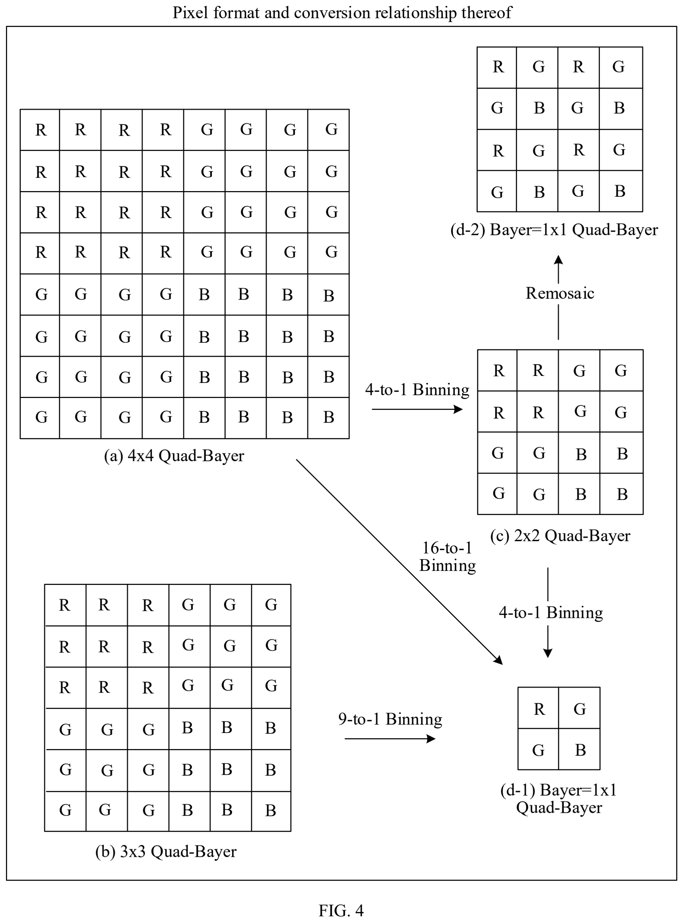

For a pixel format conversion relationship and a corresponding image dimension conversion relationship during pixel format conversion, refer to detailed descriptions of FIG. 4 to FIG. 5 below. Details are not described herein.

Currently, shooting functions of most electronic devices support zooming, that is, images under different zoom ratios are obtained by shooting. However, an electronic device is limited by a product dimension, product costs, and the like, and cannot provide an optical zooming function, or cannot achieve a wider range of zooming by optical zooming. Therefore, most electronic devices need to achieve zooming by digital zooming. However, images currently obtained by digital zooming have poor quality.

To this end, this application provides an image processing method and an electronic device. In an electronic device provided with an image sensor with a high pixel array, the electronic device performs an image processing method as follows: Firstly, a raw (RAW) image captured by the image sensor is preprocessed in a RAW domain based on a target zoom ratio and illuminance, to obtain a preprocessed image in a target pixel format. Then, magnification and cropping are performed on the preprocessed image in any one or more of a RAW domain, an RGB domain, and a YUV domain based on the target zoom ratio and a target dimension, to obtain a high-quality image of the target dimension at the target zoom ratio.

An image obtained after preprocessing may also be referred to as a first image, and an image obtained after magnification and cropping may also be referred to as a second image.

**The target zoom ratio** is a zoom ratio used by the electronic device by default or selected by the user. **The target dimension** is an image size used by the electronic device by default or selected by the user. Generally, the target dimension is a fixed value and is used for providing the user with an image of a uniform dimension. **The illuminance** refers to illuminance of a to-be-shot scenario, that is, a degree to which the to-be-shot scenario is illuminated, and specifically refers to energy of visible light received by an object per unit area. If the illuminance of the to-be-shot scenario is relatively low, a captured image is blur and has a relatively poor effect. If the illuminance of the to-be-shot scenario is relatively high, a captured image is relatively clear and has a good shooting effect.

A pixel array of a raw image outputted by **the image sensor of the high pixel array** is in an N×N Quad-Bayer format (N=4 is used as an example hereinafter for description). A target pixel format of a preprocessed image obtained after preprocessing is an M×M Quad-Bayer format. 1≤M≤N, and when M=1, the target pixel format is a Bayer format. The high pixel array is a relative concept, and specifically means that, relative to pixels of an image outputted by the electronic device in a normal shooting mode (a shooting mode in which a zoom ratio is 1×), resolution of a raw image of the high pixel array is higher. Moreover, the zoom ratio corresponding to the raw image is greater than 1×. In this application, a description is given by using an example in which the zoom ratio corresponding to the raw image is N×.

Technologies involved in the **preprocessing stage** include, but are not limited to, Pixel binning (also referred to as Binning) and pixel rearrangement (Remosaic).

(1) Binning is a pixel format conversion technology implemented by combining adjacent pixels on the image sensor. The technology achieves the following effects: Under low illuminance, effects of improving light sensitivity, reducing image noise, and improving image definition are achieved, and if more pixels are combined, anti-noise performance is better. When an image stream is acquired, a data volume of an image may be reduced to obtain a higher frame rate. During image processing, image output resolution is reduced to save processing resources. Common Binning includes the following modes: 2×2 Binning, that is, every 2×2 pixels are combined into 1 pixel, 3×3 Binning, that is, every 3×3 pixels are combined into 1 pixel, 4×4 Binning, that is, every 4×4 pixels are combined into 1 pixel, and the like, which is not limited in this embodiment of this application.

(2) Remosaic is a pixel format conversion technology in which an arrangement format of a pixel array of a raw image is converted into arrangement according to a conventional Bayer format. The technology achieves the following effects: an image of an ultra-high pixel is outputted; and an ISP directly processes the image according to a standard Bayer format.

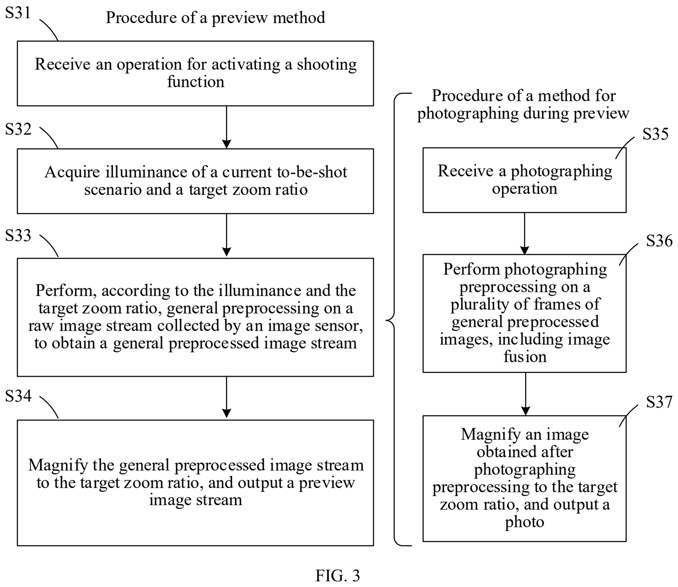

For specific implementation methods of Binning and Remosaic, refer to descriptions of FIG. 3 and FIG. 4 hereinafter. Details are not described herein.

**Magnification and cropping** means that due to a limited image processing capability in the preprocessing stage, only several images of a fixed dimension and a fixed zoom ratio can be processed, that is, the preprocessed image outputted after preprocessing may not satisfy requirements on a target zoom ratio and a target dimension, so the image further needs to be magnified based on the target zoom ratio and required content needs to be cropped based on the target dimension.

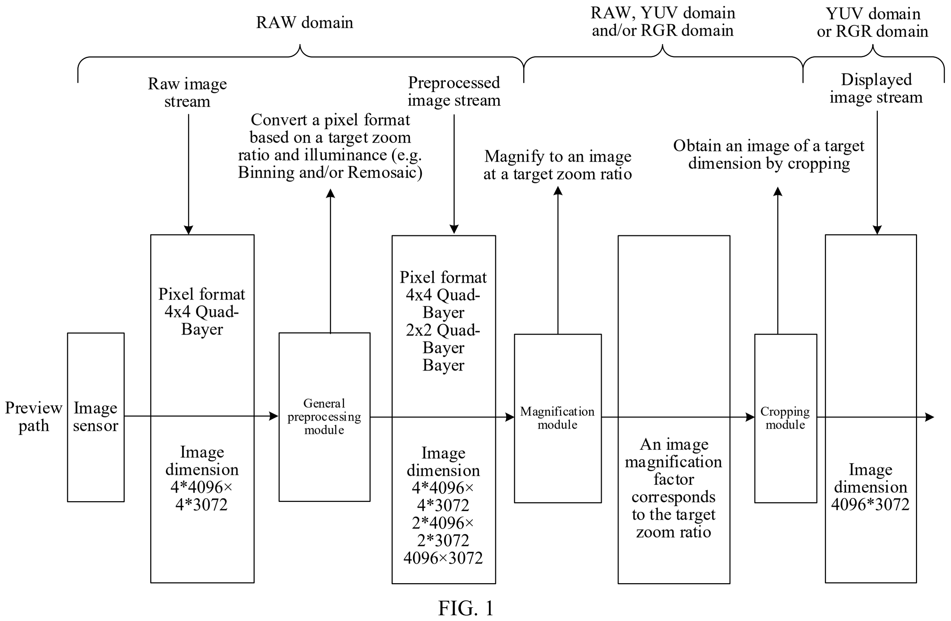

For a procedure of the image processing method provided in this application, refer to detailed descriptions of FIG. 1 to FIG. 2 hereinafter. Details are not described herein.

In conclusion, the image processing method provided in this application includes an image output policy, and may be divided into the following two stages:

In a preprocessing stage, a pixel format conversion technology to be used is determined mainly with reference to two factors, namely, a zoom ratio and illuminance. In this way, it can be ensured that a preprocessed image with high anti-noise performance is outputted under any illuminance, and preliminary zoom ratio processing can be performed at the same time, thereby simplifying a workload of cropping and scaling based on the target zoom ratio in a subsequent stage.

In a magnification and cropping stage, an image with the target zoom ratio and the target dimension only needs to be obtained by further magnification and cropping according to the target zoom ratio and the target dimension and based on the zoom ratio and an image dimension corresponding to the preprocessed image. In addition, magnification and cropping may be performed in any one or more of the RAW domain, the YUV domain, and the RGR domain. When this application provides a neural network that converts an image from the RAW domain into the YUV domain or the RGR domain, magnification and cropping as referred to in this application may be set at any one or more of before, in, and after the neural network. Particularly, when the target zoom ratio is higher, a higher image magnification factor is required. Multi-stage magnification is performed by distribution in a plurality of domains, helping output an image with more stable image quality. When the zoom ratio is lower, a smaller image magnification factor is required, and an image at the target zoom ratio may be obtained by performing multi-stage processing at any point.

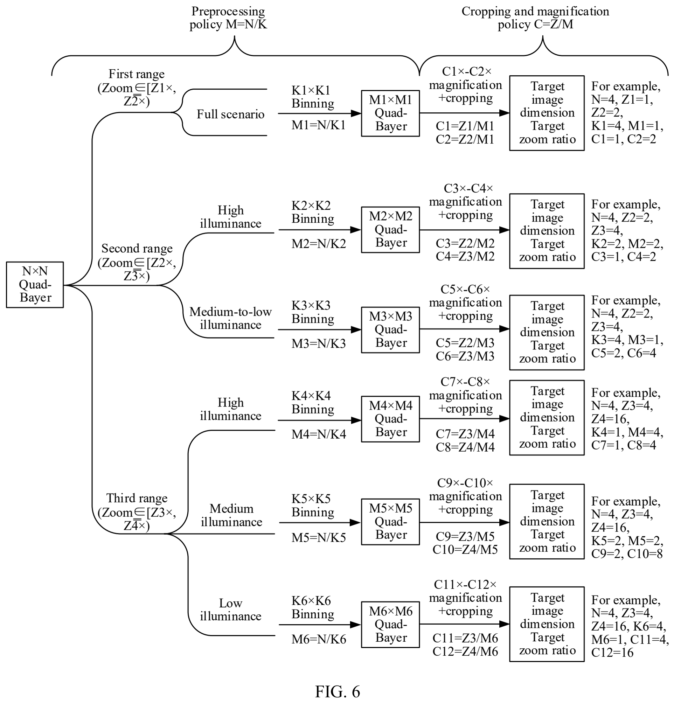

An image output policy (also referred to as a preset policy) involved in the image processing procedure provided in this application includes a preprocessing policy and a subsequent magnification and cropping policy, and may be specifically obtained with reference to detailed descriptions of FIG. 6 to FIG. 7 hereinafter. Details are not described herein.

Next, the procedure of the image processing method provided in this application is first described with reference to FIG. 1 to FIG. 3.

**FIG. 1** **is a schematic diagram of an image processing flow in a preview channel according to this application.**

As shown in FIG. 1, in a preview path, a raw image stream outputted by an image sensor is sequentially processed by a general preprocessing module, a magnification module, and a cropping module, to finally output an image stream with a target dimension at a target zoom ratio for display.
**1. The image sensor** is configured to capture an optical signal to output a raw image. A pixel format and an image dimension of the raw image are determined by hardware design of the image sensor. For example, when a pixel array in the image sensor is arranged in a 4x4 Quad-Bayer format and a dimension of the pixel array includes a total of 4*4096×4*3072 pixels, the raw image stream is in a pixel format of 4x4 Quad-Bayer and has an image dimension of 4*4096×4*3072.
**2. The general preprocessing module is** configured to preprocess the raw image in the preview path and a photographing path. The preprocessing includes: determining a preprocessing policy according to the target zoom ratio and the illuminance, and processing the raw image according to Binning and/or Remosaic corresponding to the preprocessing policy, to output a preprocessed image. A preprocessed image obtained after different degrees of Binning processing may have a changed pixel format, reduced resolution, and a decreased image dimension. However, a preprocessed image obtained after only Remosaic processing may have a changed pixel format, with the image dimension unchanged. For example, when the raw image is in a pixel format of 4x4 Quad-Bayer and has an image dimension of 4*4096×4*3072, if 16-to-1 binning processing is performed, an obtained preprocessed image is in a pixel format of Bayer and has a pixel dimension of 4096×3072. If 4-to-1 binning processing is performed, an obtained preprocessed image is in a pixel format of 2x2 Quad-Bayer Bayer and has a pixel dimension of 2*4096×2*3072. If Remosaic processing is performed, an obtained preprocessed image is in a pixel format of Bayer and has a pixel dimension of 4*4096×4*3072.

For implementation of the Binning and Remosaic technologies in the preprocessing, refer to detailed descriptions of FIG. 3 to FIG. 4 hereinafter. Details are not described herein.

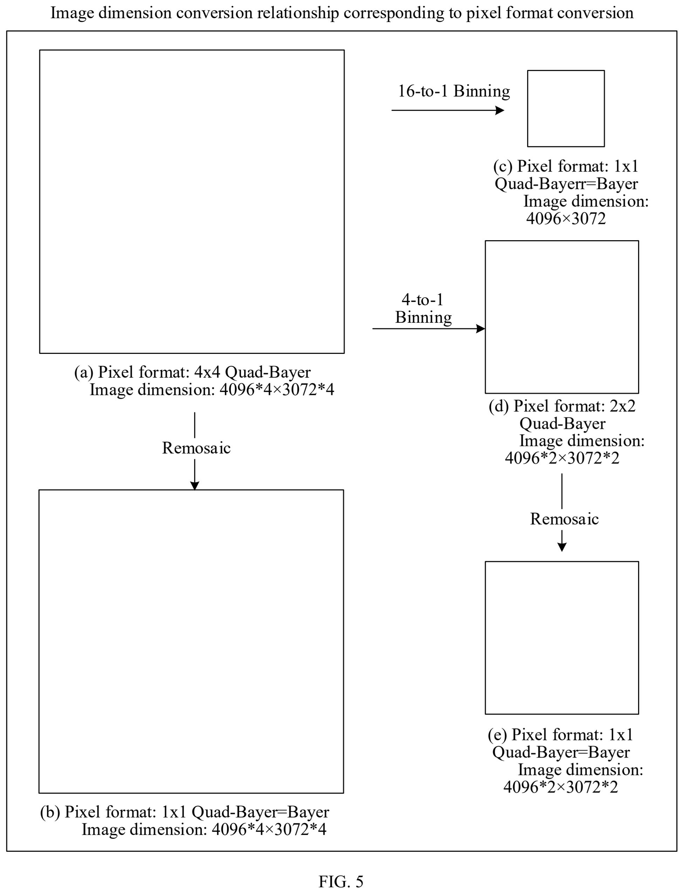

For a determination method of the preprocessing policy, refer to a detailed description of FIG. 5 hereinafter. Details are not described herein.

**3. The magnification module** is configured to magnify preprocessed image content to the target zoom ratio based on the target zoom ratio. In this embodiment of this application, the magnification module may be disposed at any one or more of before, in, and after the neural network, which is not limited in this embodiment of this application. The neural network is an algorithm module that is described hereinafter and is configured to convert an image from the RAW domain into the YUV domain or the RGR domain.

**4. The cropping module** is configured to obtain, by cropping, required content from the preprocessed image or the magnified preprocessed image based on the target dimension. In this embodiment of this application, the cropping module may be disposed independently of the magnification module, or may be integrated with the magnification module into a module with magnification and cropping functions.

The reason why the cropping module and the magnification module are disposed is as follows: When the raw image is in a pixel format of 4x4 Quad-Bayer and has an image dimension of 4*4096×4*3072, a preprocessed image obtained after different degrees of Binning processing may have reduced resolution and a decreased image dimension, while a preprocessed image obtained after only Remosaic processing exhibits no resolution reduction and an unchanged image dimension. Although the Binning processing has an image compression function, a compression capability thereof is limited and compression can be performed only by an integer multiple, while a range of zoom ratios that the user can choose is relatively wide. If a zoom ratio selected by the user is smaller, compression processing performed by Binning in the preprocessing stage may be involved, but if the zoom ratio selected by the user is larger, image magnification further needs to be involved, and the zoom ratio selected by the user may not be an integer multiple. In view of the above, the image corresponding to the target zoom ratio may not be obtained in one step only by preprocessing, and the image of the target dimension cannot be obtained either. Therefore, after preprocessing, the preprocessed image further needs to be correspondingly cropped, magnified, and the like according to the target zoom ratio and the target image dimension.

Optionally, this application does not limit a processing sequence of the cropping module and the magnification module in the preview channel. In addition to first cropping the image by using the cropping module and then magnifying the image by using the magnification module, in another possible implementation, the image may be first magnified to a dimension corresponding to the zoom ratio by using the magnification module, and then the image of the target dimension is obtained by cropping by using the cropping module.

Optionally, there may be one or more cropping modules and magnification modules respectively, and the cropping module(s) and the magnification module(s) may be disposed in any one or more of the following domains: the RAW domain, the RGB domain, and the YUV domain. In this embodiment of this application, an image in the RAW domain may be converted into an image in the RGB domain or an image in the YUV domain by using a neural network. Therefore, when disposed in the RAW domain, the cropping module and the magnification module may specifically be disposed outside the neural network, and when disposed in the RGB domain or the YUV domain, the cropping module and the magnification module may specifically be disposed inside the neural network or outside the neural network.

Preferably, when the target zoom ratio is smaller, the image may be cropped and magnified directly by using the neural network. In this way, a function of the neural network can be fully used, and a cropping and magnification function does not need to be additionally set in another stage. However, when the target zoom ratio is larger, the image may be respectively cropped and magnified in three stages, namely, before, in, and after the neural network. In this way, instability may be prevented when magnification by only a larger factor is performed only by using the neural network.

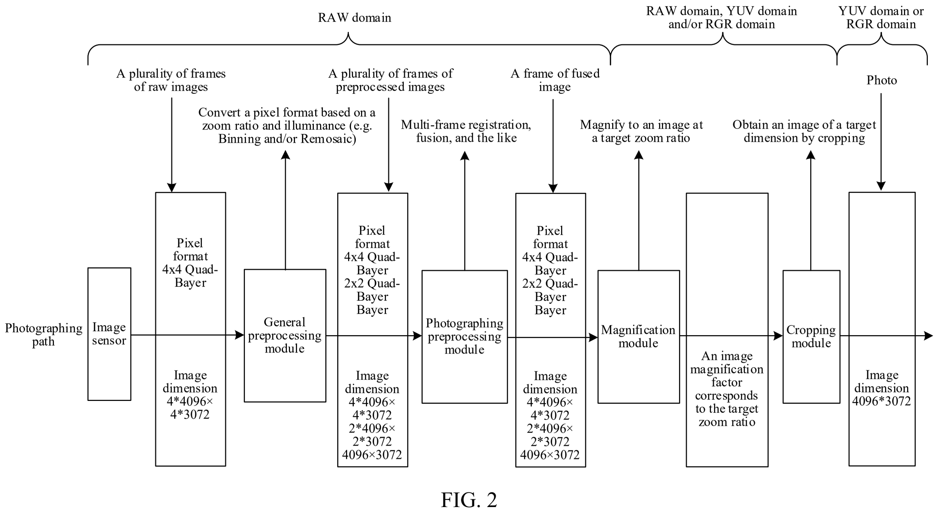

**FIG. 2** **is a schematic diagram of an image processing flow in a photographing channel according to this application.**

As shown in FIG. 2, in a photographing path, a raw image outputted by an image sensor is sequentially processed by a general preprocessing module, a photographing preprocessing module, a cropping module, and a magnification module, to finally output a photo with a target dimension at a target zoom ratio.

A processing flow of the photographing path shown in FIG. 2 differs from that of the preview channel shown in FIG. 1 in that the photographing preprocessing module is added to the photographing path. This is because the user has a higher requirement for quality of the photo than for a preview image. Therefore, in the photographing path, more operations further need to be performed on the image by using the photographing preprocessing module. The operations include, but are not limited to, performing registration based on a plurality of frames of images, to obtain a fused image with higher quality after fusion.

For functions of other modules in the photographing channel, refer to the foregoing descriptions of the corresponding modules in FIG. 1. Details are not described herein.

**FIG. 3** **is an example flowchart of an image processing method according to this application.**

As shown in FIG. 3, the method includes the following steps:
S31: An electronic device receives an operation for activating a shooting function.

Specifically, "An electronic device receives an operation for activating a shooting function" includes, but is not limited to, turning on the electronic device, and starting an operation of a camera application in the electronic device.

S32: The electronic device acquires illuminance of a current shooting scenario and a target zoom ratio.

Specifically, after receiving the operation for activating the shooting function, the electronic device may detect the illuminance in the current shooting scenario and the target zoom ratio set in the electronic device.

The electronic device may detect illuminance of a to-be-shot scenario by using an optical sensor, or may detect the illuminance of the to-be-shot scenario according to an exposure parameter of an image sensor. The exposure parameter includes, but is not limited to, any one or more of the following: parameters such as an exposure time, sensitivity, and an aperture.

The target zoom ratio is set by default by the electronic device, or is set based on a focus adjustment operation entered by a user after the shooting function is activated. The focus adjustment operation may be a swiping operation, a clicking operation, a pinch-to-zoom operation, or the like acting on a corresponding control on a display screen of the electronic device, which is not limited in this embodiment of this application.

S33: The electronic device performs, according to the illuminance and the target zoom ratio, general preprocessing on a raw image stream collected by an image sensor, to obtain a general preprocessed image stream.

Specifically, the electronic device stores a preset policy, and the preset policy includes processing mechanisms corresponding to different illuminance and target zoom ratios. For a description of the general preprocessing, refer to the foregoing description of the general preprocessing module in FIG. 1 to FIG. 2, or refer to a preprocessing policy used in a preprocessing stage described in FIG. 6 to FIG. 7 hereinafter.

S34: The electronic device magnifies the general preprocessed image stream to the target zoom ratio, and outputs a preview image stream.

Specifically, after acquiring the general preprocessed image stream, the electronic device further magnifies the general preprocessed image stream based on the target zoom ratio, and then outputs a preview image stream at the target zoom ratio in a preview interface.

Optionally, after acquiring the general preprocessed image stream, the electronic device may further crop the general preprocessed image stream, to output a preview image stream of a target dimension.

Specific implementation of the magnification operation includes, but is not limited to, upsampling, super resolution, or the like, which is not limited in this embodiment of this application. For descriptions of other magnification factors, magnification processing stages, and the like, reference may alternatively be made to a subsequent magnification and cropping policy used in a magnification and cropping stage described in FIG. 6 to FIG. 7 hereinafter.

In addition, during the foregoing image preview, the electronic device may further take a photo based on a user operation, and specific implementation includes the following steps:
S35: The electronic device receives a photographing operation.

Specifically, the photographing operation may occur at any time after step S31 above. The photographing operation includes, but is not limited to, a shutter operation acting on a camera application, a physical key operation acting on the electronic device, and the like, which is not limited in this embodiment of this application.

S36: The electronic device performs photographing preprocessing on a plurality of frames of general preprocessed images, including image fusion.

Specifically, after performing general preprocessing on a plurality of frames of raw images, the electronic device may perform photographing preprocessing on a plurality of frames of corresponding general preprocessed images before and after the photographing operation, to obtain a frame of image. The photographing preprocessing includes, but is not limited to, fusion, registration, and the like.

S37: Magnify an image obtained after photographing preprocessing to the target zoom ratio, and output a photo.

Optionally, before or after the image obtained after photographing preprocessing is magnified to the target zoom ratio, a cropping operation may further be performed, so that a finally output photo is of the target dimension. In addition, the electronic device may further save the photo in a gallery, for the user to open the gallery to view the photo.

Based on the image processing procedure described in FIG. 1 to FIG. 3 above, implementation of the Binning and Remosaic technologies involved in the preprocessing module is specifically described below with reference to FIG. 4 to FIG. 5.

**Referring to** **FIG. 4, FIG. 4** **is a schematic diagram of a plurality of pixel formats and conversion relationships thereof.**

a in FIG. 4 shows a unit pixel array in a pixel format of 4×4 Quad-Bayer. The unit pixel array includes 4 4×4 pixels, specifically including 2 4×4 green pixels, 1 4×4 blue pixel, and 1 4×4 red pixel.

b in FIG. 4 shows a unit pixel array in a pixel format of 3×3 Quad-Bayer. The unit pixel array includes 4 3×3 pixels, specifically including 2 3×3 green pixels, 1 3×3 blue pixel, and 1 3×3 red pixel.

c in FIG. 4 shows a unit pixel array in a pixel format of 2×2 Quad-Bayer. The unit pixel array includes 4 4×4 pixels, specifically including 2 2×2 green pixels, 1 2×2 blue pixel, and 1 2×2 red pixel.

d-1 in FIG. 4 shows a unit pixel array in a pixel format of 1×1 Quad-Bayer (equivalent to standard Bayer). The unit pixel array includes 4 pixels, specifically including 2 green pixels, 1 blue pixel, and 1 red pixel.

d-2 in FIG. 4 shows 4 unit pixel arrays in a pixel format of 1×1 Quad-Bayer (equivalent to standard Bayer). Arrangement of each unit pixel array is the same as that in d-1 in FIG. 4.

Conversion between the above pixel formats includes:
after 4-to-1 Binning on 4×4 Quad-Bayer shown in a in FIG. 4, 2×2 Quad-Bayer shown in c in FIG. 4 may be obtained;
after 16-to-1 Binning on 4×4 Quad-Bayer shown in a in FIG. 4, 1×1 Quad-Bayer shown in d-1 in FIG. 4 may be obtained;
after 4-to-1 Binning on 2×2 Quad-Bayer shown in c in FIG. 4, 1×1 Quad-Bayer shown in d-1 in FIG. 4 may be obtained;
after Remosaic on 2×2 Quad-Bayer shown in c in FIG. 4, 1×1 Quad-Bayer shown in d-2 in FIG. 4 may be obtained; and
after 9-to-1 Binning on 3×3 Quad-Bayer shown in b in FIG. 4, 1×1 Quad-Bayer shown in d-1 in FIG. 4 may be obtained.

It may be known based on content shown in FIG. 4 that, in addition to changing a pixel format, processing an image by Binning further involves reducing a pixel (that is, reducing an image dimension). In addition, different modes of Binning are used to reduce the image dimension to different degrees, while different modes of Remosaic do not involve changes in the image dimension.

**FIG. 5** **is a schematic diagram of image dimension conversion relationships corresponding to pixel format conversion according to an embodiment of this application.**

a in FIG. 5 shows an image having a pixel dimension of 4096*4×3072*4 and a pixel format of 4×4 Quad-Bayer shown in a in FIG. 4.

Remosaic processing is performed on the image shown in a in FIG. 5, and an image having a pixel dimension of 4096*4×3072*4 and a pixel format of 1×1 Quad-Bayer shown in b in FIG. 5 may be obtained.

16-to-1 Binning processing is performed on the image shown in a in FIG. 5, and an image having a pixel dimension of 4096×3072 and a pixel format of 1×1 Quad-Bayer shown in c in FIG. 5 may be obtained.

4-to-1 Binning processing is performed on the image shown in a in FIG. 5, and an image having a pixel dimension of 4096*2×3072*2 and a pixel format of 2×2 Quad-Bayer shown in d in FIG. 5 may be obtained.

Remosaic processing is performed on the image shown in d in FIG. 5, and an image having a pixel dimension of still 4096*2×3072*2 and a pixel format of 1×1 Quad-Bayer shown in e in FIG. 5 may be obtained.

In conclusion, in the preprocessing stage, when the raw image is processed by Remosaic, a change in the pixel format is involved. When the raw image is processed by using Binning, changing a pixel format of the raw image and reducing a pixel dimension (equivalent to reducing an image dimension and reducing resolution) are involved. Specifically, when the raw image is processed by using different degrees of Binning, the pixel dimension is reduced to different degrees.

In this embodiment of this application, 4×4 Quad-Bayer shown in a in FIG. 4 is temporarily used as an arrangement format of a color filter on the image sensor, and is also used as a pixel format of the raw image outputted by the image sensor, and 4096*4×3072*4 shown in a in FIG. 5 is used as a pixel dimension of the raw image outputted by the image sensor. FIG. 4 to FIG. 5 above only show several pixel formats, and also only show several manners of implementing pixel format conversion by Binning and/or Remosaic, which should not be construed as a limitation on this application. When the arrangement format of the color filter (the arrangement manner of the pixel array) of the image sensor is different, for example, RGBW, pixel format conversion may be implemented by using more other technologies.

In a possible implementation provided in this application, the foregoing Binning and/or Remosaic technologies that are implemented by the preprocessing module may be integrated into the image sensor, which is equivalent to that the image sensor has a capability of outputting images in a variety of pixel formats. Specifically, the image sensor may select a corresponding Binning and/or Remosaic image output mode according to a preprocessing policy in an image output policy, so as to output images in different pixel formats.

In another possible implementation provided in this application, the foregoing Binning and/or Remosaic technologies that are implemented by the preprocessing module may be integrated into an image processing path after the image sensor. That is, the same image sensor in the electronic device supports output of only an image in a fixed pixel format, and then the preprocessing module performs pixel format conversion on the image in the fixed pixel format, to obtain an image in another pixel format. For example, using an image sensor of a tele camera as an example, the image sensor supports output of only a pixel format of 4×4 Quad-Bayer shown in a in FIG. 4, and the subsequent preprocessing module performs 4-to-1 Binning processing on the pixel format of 4×4 Quad-Bayer, to obtain the pixel format of 2×2 Quad-Bayer shown in c in FIG. 4. If Remosaic processing is continuously performed on the pixel format of 2×2 Quad-Bayer, the pixel format of Bayer shown in d-2 in FIG. 4 is obtained, and if 2-to-1 Binning processing is continuously performed on the pixel format of 2×2 Quad-Bayer, the pixel format of Bayer shown in d-1 in FIG. 4 is obtained. If 16-to-1 Binning processing is directly performed on the pixel format of 4×4 Quad-Bayer, the pixel format of Bayer shown in d-1 in FIG. 4 is obtained.

Based on the implementation of the Binning and Remosaic technologies involved in the preprocessing module described in FIG. 4 to FIG. 5, the following specifically describes, with reference to FIG. 6 to FIG. 7, an image output policy used in the image processing method, mainly including the following content: In the preprocessing stage, corresponding pixel binning is first performed on the raw image according to a range of the target zoom ratio and a range of the illuminance, which can achieve an objective of preliminary zoom ratio processing while ensuring anti-noise performance of image contrast. In the magnification and cropping stage, according to a target ratio and a target dimension, further operations such as magnification and cropping only need to be performed on the preprocessed image obtained after the preliminary zoom ratio processing in the preprocessing stage, to obtain a final image corresponding to the target zoom ratio and the target dimension and having good anti-noise performance.

**FIG. 6** **shows an example image output policy involved in an image processing method according to this application.**

As shown in FIG. 6, the image processing method provided in this application includes a preprocessing policy and a cropping and magnification policy. The two policies are not independently formed, but form a complete image output policy, to completely serve image processing at a zoom ratio and illuminance.

In this embodiment of this application, the pixel format of the raw image is N×N Quad-Bayer. As already described above, since the image sensor used in this application has a high pixel array, resolution and a pixel dimension of the raw image of the high pixel array outputted by the image sensor are higher than those of an image outputted by the electronic device in a normal shooting mode (a shooting mode in which a zoom ratio is 1×). That is, the zoom ratio corresponding to the raw image is greater than 1×. In this application, a description is given by using an example in which the zoom ratio corresponding to the raw image is N×.

When the preprocessed image in the target pixel format is obtained based on a focal ratio and illuminance, a preprocessing mechanism used specifically includes:
**1. When the target zoom ratio is in a lower first range,** for example, when Zoom∈[Z1×, Z2×), the illuminance is not divided, and K1×K1 Binning is directly performed on the raw image in the pixel format of N×N Quad-Bayer to obtain a preprocessed image in a target pixel format of M1×M1 Quad-Bayer, where 1<K1≤N, and M1=N/K1. A pixel ratio corresponding to the preprocessed image is N/K1, and in the subsequent magnification and cropping stage, further processing needs to be performed based on N/K1 according to the target zoom ratio, to obtain an image of the target dimension at the target zoom ratio.

This is because a zoom ratio in the first range is a lower zoom ratio, that is, the zoom ratio corresponding to the raw image is much greater than a minimum value in the first range. Therefore, under the premise of the lower zoom ratio, the raw image generally needs to be compressed to a greater degree. In addition, when the illuminance is lower, an image with less noise can be obtained by a greater degree of Binning processing. However, when the illuminance is higher, noise of an image obtained without Binning processing is very small. Therefore, when the illuminance is higher, noise impact does not need to be considered, only a requirement on a compression ratio in the second range needs to be considered, and a greater degree of Binning processing is selected.

Therefore, when both a noise requirement and a zoom ratio requirement are satisfied, if the target zoom ratio is in a lower range, for example, the first range, the illuminance does not need to be divided, and a greater degree of Binning processing is directly performed according to a full scenario.

**In a specific example,** when N=4, Z1=1, and Z2=2, K1 may be 4, and M1=1. That is, when Zoom∈[1×, 2×), 4×4 Binning is performed on a raw image in a pixel format of 4×4 Quad-Bayer to obtain a preprocessed image in a target pixel format of 1×1 Quad-Bayer (equivalent to Bayer). The preprocessing is equivalent to compressing the raw image by 4×, to obtain a preprocessed image at a zoom ratio of 1×, and the preprocessed image at 1× has good anti-noise performance in a scenario of low illuminance. In addition, in the subsequent magnification and cropping stage, further processing needs to be performed based on 1× according to the target zoom ratio, to obtain an image of the target dimension at the target zoom ratio.

**2. When the target zoom ratio is in a medium second range,** for example, when Zoom∈[Z2×, Z3×), the illuminance may be preliminarily divided into two categories, for example, high illuminance and medium-to-low illuminance.
(1) When the luminance is higher, in the preprocessing stage, K2×K2 Binning is directly performed on the raw image in the pixel format of N×N Quad-Bayer, to obtain a preprocessed image in a target pixel format of M2×M2 Quad-Bayer, where 1<K2<K1, and M2=N/K2. A pixel ratio corresponding to the preprocessed image is N/K2. "When the luminance is higher" includes, for example, "at first illuminance".
(2) When the luminance is lower, in the preprocessing stage, K3×K3 Binning is directly performed on the raw image in the pixel format of N×N Quad-Bayer, to obtain a preprocessed image in a target pixel format of M3×M3 Quad-Bayer, where K2<K3≤K1, and M3=N/K3. A pixel ratio corresponding to the preprocessed image is N/K3. "When the luminance is lower" includes, for example, "at second illuminance". The first illuminance is greater than the second illuminance.

This is because a zoom ratio in the second range is a medium zoom ratio, that is, the zoom ratio corresponding to the raw image is slightly greater than a minimum value in the second range and less than or equal to a maximum value in the second range. Therefore, under the premise of the medium zoom ratio, the raw image generally needs to be compressed to a moderate degree. In addition, when the illuminance is lower, the noise of the image still cannot be reduced by a moderate degree of Binning, so a greater degree of Binning processing needs to be performed. However, when the illuminance is higher, noise of an image obtained without Binning processing is very small. Therefore, when the illuminance is higher, noise impact does not need to be considered, only a requirement on a compression ratio in the second range needs to be considered, and a moderate degree of Binning processing is selected.

Therefore, when both a noise requirement and a zoom ratio requirement are met, if the zoom ratio falls within a medium range, for example, the second range, the illuminance is divided according to high illuminance and medium-to-low illuminance, and the foregoing different degrees of Binning processing are separately performed.

**In a specific example,** when N=4, Z2=2, and Z3=4, if K2 is 2, M2=2, and if K3 is 4, M3=1. That is, when Zoom∈[2×, 4×), in a scenario of high illuminance, 2×2 Binning is performed on the raw image in the pixel format of 4×4 Quad-Bayer to obtain a preprocessed image in a target pixel format of 2×2 Quad-Bayer. The preprocessing is equivalent to compressing the raw image by 2×, to obtain a preprocessed image at a zoom ratio of 2×. In addition, in the subsequent magnification and cropping stage, further processing needs to be performed based on 2× according to the target zoom ratio, to obtain the image of the target dimension at the target zoom ratio. That is, when Zoom∈[2×, 4×), in a scenario of medium-to-low illuminance, 4×4 Binning is performed on raw image in the pixel format of 4×4 Quad-Bayer to obtain a preprocessed image in a target pixel format of 1×1 Quad-Bayer (equivalent to Bayer). The preprocessing is equivalent to compressing the raw image by 4×, to obtain a preprocessed image at a zoom ratio of 1×. In addition, in the subsequent magnification and cropping stage, further processing needs to be performed based on 1× according to the target zoom ratio, to obtain the image of the target dimension at the target zoom ratio.

**3. When the target zoom ratio is in a larger third range,** for example, when Zoom∈[Z3×, Z4×), the illuminance may be further divided into three categories, for example, high illuminance, medium illuminance, and low illuminance.
(1) At the high illuminance, Binning processing is not performed on the raw image in the pixel format of N×N Quad-Bayer in the preprocessing stage, which is equivalent to performing K4×K4 Binning to obtain a preprocessed image in a target pixel format of M4×M4 Quad-Bayer, where K4=1, and M4=N/K4. A pixel ratio corresponding to the preprocessed image is N/K4. Herein, "at the high illuminance", for example, includes "at third illuminance".
(2) At the medium luminance, in the preprocessing stage, a moderate degree of Binning processing is performed on the raw image, that is, K5×K5 Binning is performed on the raw image in the pixel format of N×N Quad-Bayer, to obtain a preprocessed image in a target pixel format of M5×M5 Quad-Bayer, where 1<K5<K1, and M5=N/K5. A pixel ratio corresponding to the preprocessed image is N/K5. Herein, "at the medium illuminance", for example, includes "at fourth illuminance". The third illuminance is greater than the fourth illuminance.
(3) At the low luminance, a greater degree of Binning processing is performed on the raw image, that is, K6×K6 Binning is performed on the raw image in the pixel format of N×N Quad-Bayer, to obtain a preprocessed image in a target pixel format of M6×M6 Quad-Bayer, where K5<K6<K1, and M6=N/K6. A pixel ratio corresponding to the preprocessed image is N/K6. Herein, "at the low illuminance", for example, includes "at fifth illuminance". The fourth illuminance is greater than the fifth illuminance.

This is because a zoom ratio in the third range is a larger zoom ratio, that is, the zoom ratio corresponding to the raw image is slightly less than or equal to a minimum value in the third range. Therefore, under the premise of the larger zoom ratio, the raw image generally does not need to be compressed. In addition, when the illuminance is lower, the noise of the image cannot be reduced without Binning processing, so a greater degree of Binning processing needs to be performed. However, when the illuminance is medium, only a moderate degree of Binning processing is needed to reduce noise and reduce pressure of subsequent image magnification. However, when the illuminance is higher, noise of an image obtained without Binning processing is very small. Therefore, when the illuminance is higher, noise impact does not need to be considered, only a requirement on a compression ratio in the third range needs to be considered, and Binning processing is not performed.

Therefore, when both a noise requirement and a zoom ratio requirement are met, if the zoom ratio falls within a larger range, for example, the third range, the illuminance is divided according to high illuminance, medium illuminance, and low illuminance, and the foregoing different degrees of Binning processing are separately performed.

**In a specific example,** when N=4, Z3=4, and Z4=16, if K4 is 1, M4=4, if K5 is 2, M5=2, and if K6 is 4, M6=1. That is, when Zoom∈[4×, 16×), in a scenario of high illuminance, 1×1 Binning is performed on the raw image in the pixel format of 4×4 Quad-Bayer to obtain a preprocessed image in a target pixel format of 4×4 Quad-Bayer. The preprocessing is equivalent to not compressing the raw image, to just obtain a preprocessed image at a zoom ratio of 4×. In addition, in the subsequent magnification and cropping stage, further processing needs to be performed based on 4× according to the target zoom ratio, to obtain the image of the target dimension at the target zoom ratio. When Zoom∈[4×, 16×), in a scenario of medium illuminance, 2×2 Binning is performed on the raw image in the pixel format of 4×4 Quad-Bayer to obtain a preprocessed image in a target pixel format of 2×2 Quad-Bayer. The preprocessing is equivalent to compressing the raw image by 2×, to obtain a preprocessed image at a zoom ratio of 2×. In addition, in the subsequent magnification and cropping stage, further processing needs to be performed based on 2× according to the target zoom ratio, to obtain the image of the target dimension at the target zoom ratio. In a scenario of low illuminance, 4×4 Binning is performed on the raw image in the pixel format of 4×4 Quad-Bayer to obtain a preprocessed image in a target pixel format of 1×1 Quad-Bayer (equivalent to Bayer). The preprocessing is equivalent to compressing the raw image by 4×, to obtain a preprocessed image at a zoom ratio of 1×. In addition, in the subsequent magnification and cropping stage, further processing needs to be performed based on 1× according to the target zoom ratio, to obtain the image of the target dimension at the target zoom ratio.

The preprocessing stage shown in FIG. 5 only shows Binning processing as an example. In addition, after any degree of Binning processing, Remosaic processing may further be performed. Changes in a zoom ratio and a pixel dimension are not involved before and after the Remosaic processing, but the pixel format may be unified into a Bayer format, so that it is convenient for a subsequent image signal processor to directly process data in the format.

The foregoing describes only the preprocessing policy used in the preprocessing stage and included in the image output policy. The following describes a magnification and cropping policy that further needs to be used based on the preprocessing policy.
1. **When the target zoom ratio is in the lower first range,** K1×K1 Binning is performed on the raw image in the preprocessing stage to output a preprocessed image in a pixel format of M1×M1 Quad-Bayer, equivalent to outputting a preprocessed image at a zoom ratio of N/K1. Therefore, in the magnification and cropping stage, the preprocessed image further needs to be magnified by C1×-C2×. When the target zoom ratio is a minimum value in the first range, that is, Z1, C1=Z1/(N/K1)=Z1/M1. When the target zoom ratio is a maximum value in the first range, that is, Z2, C2=Z2/(N/K1)=Z2/M1.

**In a specific example,** when N=4, Z1=1, Z2=2, K1=4, and M1=1, C1=1 and C2=2. That is, when Zoom∈[1×, 2×], the foregoing preprocessing stage is equivalent to compressing the raw image by 4×, to just obtain a preprocessed image at a zoom ratio of 1×. Therefore, in the magnification and cropping stage, according to the target zoom ratio, the image at 1× further needs to be processed according to the target zoom ratio and based on 1×. If the target zoom ratio is specifically 1×, further magnification is not performed; if the target zoom ratio is specifically 1.5×, the image is further magnified to 1.5× based on 1×; and if the target zoom ratio is specifically 1.9×, the image is further magnified to 1.9× based on 1× to obtain the image of the target dimension at the target zoom ratio. In addition, the image further needs to be cropped to the target dimension according to the target dimension.

2-1. **When the target zoom ratio is in the medium second range and the illuminance is high illuminance,** for example, when Zoom ∈ [Z2×, Z3×), K2×K2 Binning is performed on the raw image in the preprocessing stage to output a preprocessed image in a pixel format of M2×M2 Quad-Bayer, equivalent to outputting a preprocessed image at a zoom ratio of N/K2. Therefore, in the magnification and cropping stage, the preprocessed image further needs to be magnified by C3 ×-C4×. When the target zoom ratio is a minimum value in the second range, that is, Z2, C3=Z2/(N/K2)=Z2/M2. When the target zoom ratio is a maximum value in the second range, that is, Z3, C4=Z3/(N/K2)=Z3/M2.

**In a specific example,** when N=4, Z2=2, Z3=4, K2=2, and M2=2, C3=1 and C4=2. That is, when Zoom∈[2×, 4×], the foregoing preprocessing stage is equivalent to compressing the raw image by 2×, to just obtain a preprocessed image at a zoom ratio of 2×. Therefore, in the magnification and cropping stage, the image at 2× further needs to be processed according to the target zoom ratio and based on 2×. If the target zoom ratio is specifically 2×, further magnification is not performed; if the target zoom ratio is specifically 3×, the image is further magnified to 1.5× based on 2×; and if the target zoom ratio is specifically 3.9×, the image is further magnified to 3.9× based on 2× to obtain the image of the target dimension at the target zoom ratio. In addition, the image further needs to be cropped to the target dimension according to the target dimension.

2-2. **When the target zoom ratio is in the medium second range and the illuminance is medium-to-low illuminance,** for example, when Zoom∈[Z2×, Z3×), K3×K3 Binning is performed on the raw image in the preprocessing stage to output a preprocessed image in a pixel format of M3×M3 Quad-Bayer, equivalent to outputting a preprocessed image at a zoom ratio of N/K3. Therefore, in the magnification and cropping stage, the preprocessed image further needs to be magnified by C5×-C6×. When the target zoom ratio is a minimum value in the second range, that is, Z2, C5=Z2/(N/K3)=Z2/M3. When the target zoom ratio is a maximum value in the second range, that is, Z3, C6=Z3/(N/K3)=Z3/M3.

**In a specific example,** when N=4, Z2=2, Z3=4, K3=4, and M3=1, C5=2 and C6=4. That is, when Zoom∈[2×, 4×], the foregoing preprocessing stage is equivalent to compressing the raw image by 4×, to just obtain a preprocessed image at a zoom ratio of 1×. Therefore, in the magnification and cropping stage, according to the target zoom ratio, the image at 1× further needs to be processed according to the target zoom ratio and based on 1×. If the target zoom ratio is specifically 2×, the image is further magnified to 2× based on 1×; if the target zoom ratio is specifically 3×, the image is further magnified to 3× based on 1×; and if the target zoom ratio is specifically 3.9×, the image is further magnified to 3.9× based on 1× to obtain the image of the target dimension at the target zoom ratio. In addition, the image further needs to be cropped to the target dimension according to the target dimension.

**3-1. When the target zoom ratio is in the larger third range and the illuminance is high illuminance,** for example, when Zoom∈[Z3×, Z4×), K4×K4 Binning is performed on the raw image in the preprocessing stage to output a preprocessed image in a pixel format of M4×M4 Quad-Bayer, equivalent to outputting a preprocessed image at a zoom ratio of N/K4. Therefore, in the magnification and cropping stage, the preprocessed image further needs to be magnified by C7×-C8×. When the target zoom ratio is a minimum value in the third range, that is, Z3, C7=Z3/(N/K4)=Z3/M4. When the target zoom ratio is a maximum value in the third range, that is, Z4, C8=Z4/(N/K4)=Z4/M4.

**In a specific example,** when N=4, Z3=4, Z4=16, K4=1, and M4=4, C7=1 and C8=4. That is, when Zoom∈[4×, 16×], the foregoing preprocessing stage is equivalent to not compressing the raw image, to just obtain a preprocessed image at a zoom ratio of 4×. Therefore, in the magnification and cropping stage, the image at 4× further needs to be processed according to the target zoom ratio and based on 4×. If the target zoom ratio is specifically 4×, further magnification is not performed; if the target zoom ratio is specifically 12×, the image is further magnified to 12× based on 4×; and if the target zoom ratio is specifically 16×, the image is further magnified to 4× based on 4× to obtain the image of the target dimension at the target zoom ratio. In addition, the image further needs to be cropped to the target dimension according to the target dimension.

**3-2. When the target zoom ratio is in the larger third range and the illuminance is medium illuminance,** for example, when ZoomE [Z3×, Z4×), K5×K5 Binning is performed on the raw image in the preprocessing stage to output a preprocessed image whose pixel format is M5×M5 Quad-Bayer, equivalent to outputting a preprocessed image whose zoom ratio is N/K5. Therefore, in the magnification and cropping stage, the preprocessed image further needs to be magnified by C9×-C10×. When the target zoom ratio is a minimum value in the third range, that is, Z3, C9=Z3/(N/K5)=Z3/M5. When the target zoom ratio is a maximum value in the third range, that is, Z4, C10=Z4/(N/K5)=Z4/M5.

**In a specific example,** when N=4, Z3=4, Z4=16, K5=2, and M5=2, C9=2 and C10=8. That is, when Zoom∈[4×, 16×], the foregoing preprocessing stage is equivalent to compressing the raw image by 2×, to just obtain a preprocessed image at a zoom ratio of 2×. Therefore, in the magnification and cropping stage, the image at 2× further needs to be processed according to the target zoom ratio and based on 2×. If the target zoom ratio is specifically 4×, the image is further magnified to 4× based on 2×; if the target zoom ratio is specifically 12×, the image is further magnified to 12× based on 2×; and if the target zoom ratio is specifically 16×, the image is further magnified to 2× based on 16× to obtain the image of the target dimension at the target zoom ratio. In addition, the image further needs to be cropped to the target dimension according to the target dimension.

**3-3. When the target zoom ratio is in the larger third range and the illuminance is low illuminance,** for example, when Zoom∈[Z3×, Z4×), K6×K6 Binning is performed on the raw image in the preprocessing stage to output a preprocessed image in a pixel format of M6×M6 Quad-Bayer, equivalent to outputting a preprocessed image at a zoom ratio of N/K6. Therefore, in the magnification and cropping stage, the preprocessed image further needs to be magnified by C11×-C12×. When the target zoom ratio is a minimum value in the third range, that is, Z3, C11=Z3/(N/K6)=Z3/M6. When the target zoom ratio is a maximum value in the third range, that is, Z4, C 2=Z4/(N/K6)=Z4/M6.

**In a specific example,** when N=4, Z3=4, Z4=16, K6=4, and M6=1, C11=4 and C12=16. That is, when Zoom∈[4×, 16×], the foregoing preprocessing stage is equivalent to compressing the raw image by 4×, to just obtain a preprocessed image at a zoom ratio of 1×. Therefore, in the magnification and cropping stage, the image at 1× further needs to be processed according to the target zoom ratio and based on 1×. If the target zoom ratio is specifically 4×, the image is further magnified to 4× based on 1×; if the target zoom ratio is specifically 12×, the image is further magnified to 12× based on 1×; and if the target zoom ratio is specifically 16×, the image is further magnified to 1× based on 16× to obtain the image of the target dimension at the target zoom ratio. In addition, the image further needs to be cropped to the target dimension according to the target dimension.

Division of the range of the zoom ratio involved in the processing policy shown in FIG. 6 is merely an example. Optionally, more or fewer ranges may be obtained by division, which specifically needs to be comprehensively determined according to the range of the zoom ratio provided by the electronic device and a maximum pixel array of the image sensor, to ensure that a high pixel array is fully used, anti-noise performance of the image can be improved, and zoom processing can be facilitated, which is not limited in this embodiment of this application.

In conclusion, the image output policy used in the image processing method provided in this application mainly includes the following content: In the preprocessing stage, corresponding pixel binning is first performed on the raw image according to a range of the target zoom ratio and a range of the illuminance, which can achieve an objective of preliminary zoom ratio processing while ensuring anti-noise performance of image contrast. In the magnification and cropping stage, according to a target ratio and a target dimension, further operations such as magnification and cropping only need to be performed on the preprocessed image obtained after the preliminary zoom ratio processing in the preprocessing stage, to obtain a final image corresponding to the target zoom ratio and the target dimension and having good anti-noise performance.

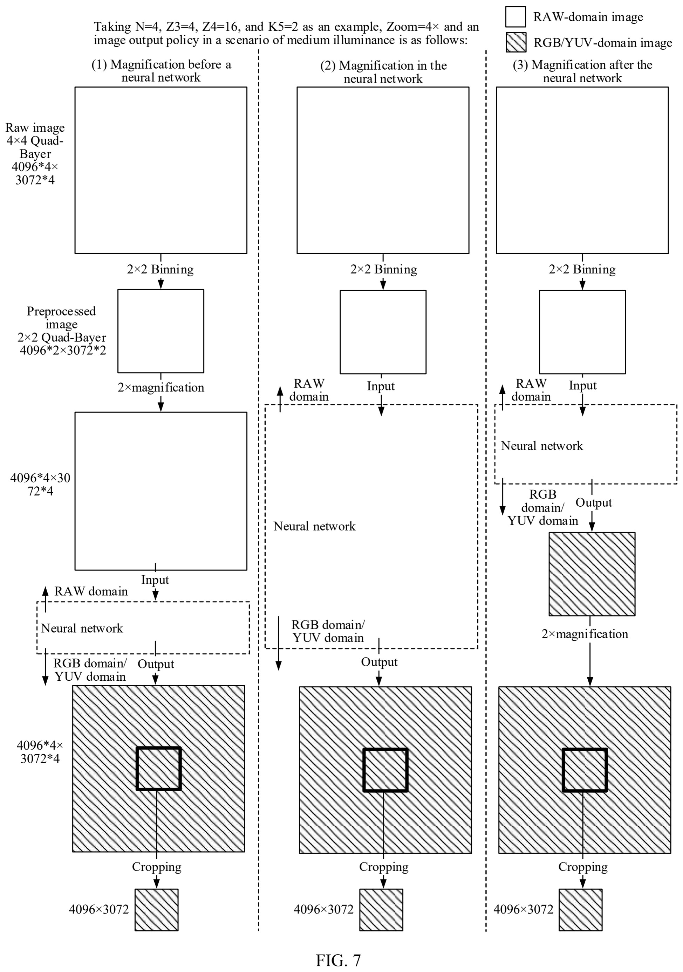

Further, the magnification operation involved in the image processing method provided in this application may be performed in any one of a plurality of stages, specifically including stages before, in, and after the neural network. A role of the neural network includes, but is not limited to, converting the raw image, for example, converting an image from the RAW domain into the RGB domain or the YUV domain. Specific implementation of the magnification operations in the three stages may be obtained with reference to a description of FIG. 7 hereinafter.

**FIG. 7** **is a schematic diagram of a specific image output policy implementation method according to this application.**

As shown in FIG. 7, a specific image output policy implementation method is shown by using only an example of an image output policy in which N=4, Z3=4, Z4=16, K5=2, a target zoom ratio is 4×, a target dimension is 4096×3072, and an image output policy in a scenario of medium illuminance.
1. In the preprocessing stage, 2×2 Binning is performed on a raw image that is in a pixel format of 4×4 Quad-Bayer and has an image dimension of 4096*4×3072*4, to obtain a preprocessed image that is in a pixel format of 2×2 Quad-Bayer and has an image dimension of 4096*2×3072*2.
2-1: If magnification is performed before the neural network, the magnification stage is specifically that the preprocessed image is magnified by 2× in the RAW domain before the neural network, to obtain an image at a zoom ratio of 4×. A dimension of the image at a zoom ratio of 4× is correspondingly magnified to 4096*4×3072*4. After the magnified image is inputted to the neural network, compared with the inputted image, a zoom ratio and an image dimension of an image outputted by the neural network remain unchanged. Finally, an image with a target dimension of 4096×3072 is obtained only by cropping.
   Optionally, magnification performed before the neural network may specifically be performed by a function provided by in-sensor zoom of the electronic device. The in-sensor zoom refers to an operation completed in the image sensor. That is, the image sensor provided in this application may have a zoom processing capability.
2-2. If magnification is performed in the neural network, the preprocessed image in the RAW domain is directly inputted to the neural network. In addition to converting the image to the RGB/YUV domain in the neural network, the image further needs to be magnified by 2×, to obtain an image at a zoom ratio of 4×. A dimension of the image at the zoom ratio of 4× is correspondingly magnified to 4096*4×3072*4. Therefore, compared with the inputted image, a zoom ratio of an image outputted by the neural network is magnified by 2×, which is equivalent to magnification to 4× based on 2×, and the dimension of the image is also magnified to 4096*4×3072*4 based on 4096*2×3072*2. Finally, an image with a target dimension of 4096×3072 is obtained only by cropping.
2-3. If magnification is performed after the neural network, the preprocessed image in the RAW domain is directly inputted to the neural network. In addition to converting the image to the RGB/YUV domain in the neural network, magnification does not need to be performed. Therefore, a zoom ratio and an image dimension of an image outputted by the neural network are the same as those of a preprocessing result. Therefore, after the neural network, the image further needs to be magnified by 2×, to obtain an image at a zoom ratio of 4×. A dimension of the image at the zoom ratio of 4× is correspondingly magnified to 4096*4×3072*4. Finally, an image with a target dimension of 4096×3072 is obtained only by cropping.

FIG. 7 exemplarily describes a magnification process in any one of the three stages included in the image output policy by using only one scenario as an example. In addition, superimposition may be performed in any combination of the three stages to obtain an image corresponding to the target zoom ratio. Examples are not described in this embodiment of this application one by one. Optionally, when the zoom ratio is higher, a higher image magnification factor is required. Multi-stage magnification is performed by distribution in a plurality of stages, helping output an image with more stable image quality. When the zoom ratio is lower, a smaller image magnification factor is required, so an image at the target zoom ratio may be obtained by performing multi-stage processing at any point.

Next, software and hardware architectures and a product form of the electronic device as referred to in this application are described.

The electronic device may be a portable terminal device equipped with an iOS^{®}, Android^{®}, Microsoft^{®}, or another operating system, such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device.

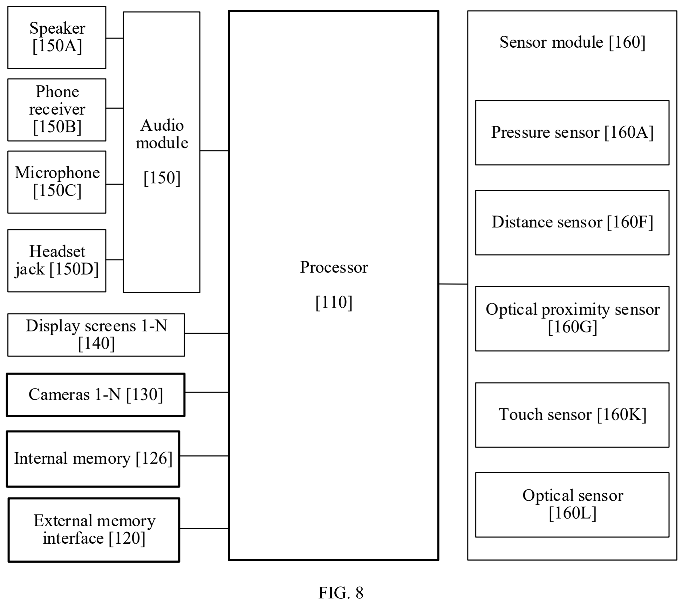

FIG. 8 is a schematic diagram of a hardware architecture of an electronic device.

As shown in FIG. 8, the electronic device may include: a processor 110, an external memory interface 120, an internal memory 126, a camera 130, a display screen 140, an audio module 150, a speaker 150A, a phone receiver 150B, a microphone 150C, a headset jack 150D, and a sensor module 160. The sensor module 160 may include a pressure sensor 160A, a distance sensor 160F, an optical proximity sensor 160G, a touch sensor 160K, an optical sensor 160L, and the like.

It may be understood that, the schematic structure in this embodiment of this application constitutes no specific limitation on the electronic device. In some other embodiments of this application, the electronic device may include more or fewer components than those shown in the figure, some components may be combined, some components may be split, or different arrangements may be used. The components shown in the figure may be implemented by using hardware, software, or a combination of software and hardware. For example, the electronic device may further include a key, a motor, an indicator, a subscriber identification module (subscriber identity module, SIM) card interface, and the like. In another example, the sensor module may further include: a gyroscope sensor, a barometric pressure sensor, a magnetic sensor, an acceleration sensor, a fingerprint sensor, a temperature sensor, a bone conduction sensor, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate devices, or may be integrated into one or more processors.

The controller may be a nerve center and a command center of the electronic device. The controller may generate an operation control signal based on instruction operation code and a sequence signal, and control obtaining and executing of instructions.

A memory may be further disposed in the processor 110, to store instructions and data. In some embodiments, the memory in the processor 110 is a cache. The memory may store instructions or data that has just been used or is cyclically used by the processor 110. If the processor 110 needs to use the instructions or the data again, the processor may directly call the instructions or the data from the memory. This avoids repeated access, and reduces a waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

In this embodiment of this application, the processor 110 may be configured to run a camera application. The processor 110 is configured to control modules in the camera application, and the camera 130 and the like to perform the image processing procedure shown in FIG. 1 to FIG. 2 above. In the image processing procedure, the image output policy shown in FIG. 6 to FIG. 7 above is specifically used.

It may be understood that, a schematic interface connection relationship between the modules in this embodiment of this application is merely an example for description, and constitutes no limitation on the structure of the electronic device. In some other embodiments of this application, the electronic device may alternatively use an interface connection manner different from that in the foregoing embodiment, or use a combination of a plurality of interface connection manners.

The internal memory 126 may include one or more random access memories (random access memory, RAM), and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM is generally referred to as a DDR5 SDRAM), and the like.

The non-volatile memory may include a disk storage device and a flash memory (flash memory).

According to an operating principle, the flash memory may be divided into NOR FLASH, NAND FLASH, 3D NAND FLASH, and the like; according to potential orders of storage cells, the flash memory may be divided into a single-level storage cell (single-level cell, SLC), a multi-level cell (multi-level cell, MLC), a triple-level cell (TLC), a triple-level cell (QLC), and the like; and according to a storage specification, the flash memory may be divided into a universal flash storage (universal flash storage, UFS), Embed multimedia storage cardan embedded multimedia card (embedded multi media Card, eMMC), and the like.

The random access memory may allow direct reading and writing by the processor 110, may be configured to store executable programs (for example, machine instructions) of an operating system or other running programs, or may be configured to store data of users and applications.

The non-volatile memory may also store the executable programs, the data of the users and the applications, and the like, and may be loaded into the random access memory in advance for the processor 110 to perform direct reading and writing.

The external memory interface 120 may be configured to connect to an external non-volatile memory, to expand a storage capability of the electronic device. The external non-volatile memory communicates with the processor 110 by using the external memory interface 120, to implement a data storage function. For example, a file such as music or a video is stored in the external non-volatile memory.

In this embodiment of this application, the memory may be configured to store operating data of the camera application and user data, including, but not limited to, an image output policy corresponding to a zoom ratio and illuminance, a photographed picture, and the like.

The electronic device implements a display function through the GPU, the display screen 140, the application processor, and the like. The GPU is an image processing microprocessor, and is connected to the display screen 140 and the application processor. The GPU is configured to perform mathematical and geometric calculations and perform graphics rendering. The processor 110 may include one or more GPUs that execute program instructions to generate or change display information.

The display screen 140 is configured to display an image, a video, and the like. The display screen 140 includes a display panel. The display panel may use a liquid crystal display (liquid crystal display, LCD). The display panel may also use an organic light-emitting diode (organic light-emitting diode, OLED), an active-matrix organic light-emitting diode (active-matrix organic light emitting diode, AMOLED), a flexible light-emitting diode (flex light-emitting diode, FLED), a miniled, a microLed, a micro-oled, a quantum dot light-emitting diode (quantum dot light emitting diode, QLED), and the like. In some embodiments, the electronic device may include 1 or N display screens 140, where N is a positive integer greater than 1.

In this embodiment of this application, the display screen 140 may be configured to display an interface provided by a camera application and an interface provided by a gallery, and specifically includes, but is not limited to, a preview interface, a shooting interface, a setting interface, and the like. A control/icon/option that allows the user to adjust a zoom ratio and an image dimension may be displayed in the camera application.

The electronic device may implement a shooting function by using the ISP, the camera 130, the video codec, the GPU, the display screen 140, the application processor, and the like.

The ISP is configured to process data fed back by the camera 130. For example, during the photographing, a shutter is enabled. Light is transmitted to a photosensitive element of the camera through a lens, and an optical signal is converted into an electrical signal. The photosensitive element of the camera transmits the electrical signal to the ISP for processing and converted into an image visible to a naked eye. The ISP may also optimize noise point and brightness algorithms for an image. The ISP may further optimize parameters such as exposure and color temperature of a shooting scenario. In some embodiments, the ISP may be disposed in the camera 130.

The camera 130 is configured to capture a still image or a video. The camera 130 may include the foregoing image sensor. An optical image of an object is generated through the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard RGB or YUV format. In some embodiments, the electronic device may include 1 or N cameras 130, where N is a positive integer greater than 1.

In this embodiment of this application, the image sensor is a component of the camera 130.

In this embodiment of this application, the camera 130 may include one or more cameras, for example, a main camera, a wide-angle camera, and a tele camera.

The digital signal processor is configured to process a digital signal. In addition to the digital image signal, the digital signal processor may process other digital signals. For example, when the electronic device selects a frequency point, the digital signal processor is configured to perform Fourier transform or the like on frequency-point energy.

The video codec is configured to: compress or decompress a digital video. The electronic device may support one or more video codecs. In this way, the electronic device can play or record videos in a plurality of encoding formats, such as a moving picture experts group (moving picture experts group, MPEG) 1, MPEG2, MPEG3, and MPEG4.

The NPU is a neural-network (neural-network, NN) computing processor, which quickly processes input information with reference to a structure of a biological neural network, for example, a transfer mode between human brain neurons, and may further continuously perform self-learning. The NPU may be configured to implement an application such as intelligent cognition of the electronic device, for example, image recognition, facial recognition, voice recognition, text understanding, and the like.

In this embodiment of this application, the neural network may be configured to perform domain conversion on the image in an image processing stage, or further perform magnification, cropping, and the like on the image.

The electronic device may implement an audio function by using the audio module 150, the speaker 150A, the receiver 150B, the microphone 150C, the headset jack 150D, the application processor, and the like, such as music playback and recording.

The audio module 150 is configured to convert digital audio information into an analog audio signal for output, and is also configured to convert an analog audio input into a digital audio signal. The audio module 150 may be further configured to encode and decode an audio signal. In some embodiments, the audio module 150 may be disposed in the processor 110, or some functional modules of the audio module 150 are disposed in the processor 110.

The speaker 150A, also referred to as a "loudspeaker", is configured to convert an audio electrical audio signal into a sound signal. The electronic device can allow listening to music or answering a hands-free call through the speaker 150A.

The telephone receiver 150B, also referred to as an "earpiece", is configured to convert an audio electrical audio signal into a sound signal. When a call is answered or a voice message is listened to by using the electronic device, the receiver 150B may be put close to a human ear to listen to a voice.

The microphone 150C, also referred to as a "voice tube" or "mike", is configured to convert a sound signal into an electrical signal. When making a call or sending voice information, the user may keep the mouth close to the microphone 150C and speak, to input a sound signal into the microphone 150C. At least one microphone 150C may be disposed in the electronic device. In other embodiments, the electronic device may be provided with two microphones 150C, to implement a noise reduction function in addition to collecting sound signals. In other embodiments, the electronic device may alternatively be provided with three, four, or more microphones 150C to collect the sound signals, reduce noise, identify sound sources to implement a directional recording function, and the like.

The headset interface 150D is configured to connect to a wired headset. The headset jack 150D may be a USB interface, or may be a 3.5 mm open mobile electronic device platform (open mobile terminal platform, OMTP) standard interface, or a cellular telecommunications industry association of the USA (cellular telecommunications industry association of the USA, CTIA) standard interface.

The pressure sensor 160A is configured to sense a pressure signal and may convert the pressure signal into an electrical signal. In some embodiments, the pressure sensor 160A may be disposed on the display screen 140. There are many types of pressure sensors 160A, such as a resistive pressure sensor, an inductive pressure sensor, and a capacitive pressure sensor. The capacitive pressure sensor may include at least two parallel plates made of conductive materials. When a force is applied onto the pressure sensor 160A, a capacitance between electrodes changes. The electronic device determines strength of the pressure according to a change in the capacitance. When a touch operation is performed on the display screen 140, the electronic device detects intensity of the touch operation through the pressure sensor 160A. The electronic device may further calculate a touch position according to a detection signal of the pressure sensor 160A. In some embodiments, touch operations that are performed at a same touch position but have different touch operation intensity may correspond to different operation instructions. For example, when a touch operation of which touch operation strength is less than a first pressure threshold acts on a short message application icon, an instruction of viewing a short message is performed. When a touch operation whose touch operation strength is greater than or equal to a first pressure threshold is performed on a short message application icon, an instruction of creating a new short message is executed.

The distance sensor 160F is configured to measure a distance. The electronic device may measure a distance through infrared or laser. In some embodiments, in a photographing scenario, the electronic device may measure a distance by using the distance sensor 160F, to implement quick focusing. In some embodiments, the electronic device may collect an object distance in scene data by using the distance sensor 160F, that is, a distance between a photographed object and the electronic device.

The optical proximity sensor 160G may include, for example, a light-emitting diode (LED) and an optical detector such as a photodiode. The light-emitting diode may be an infrared light-emitting diode. The electronic device emits infrared light outwards by using the light-emitting diode. The electronic device detects infrared reflected light from a nearby object by using the photodiode. When sufficient reflected light is detected, it may be determined that there is an object near the electronic device. When insufficient reflected light is detected, the electronic device may determine that there is no object near the electronic device. The electronic device may detect, by using the optical proximity sensor 160G, that a user holds the electronic device close to the ear for a call, so that a screen can be automatically turned off to save power. The optical proximity sensor 160G may be further configured to automatically unlock and lock a screen in a leather case mode and a pocket mode.

The touch sensor 160K is also referred to as a "touch panel". The touch sensor 160K may be disposed on the display screen 140. The touch sensor 160K and the display screen 140 form a touchscreen, which is also referred to as a "touch screen". The touch sensor 160K is configured to detect a touch operation performed on or near the touch sensor. The touch sensor may transmit the detected touch operation to the application processor, to determine a touch event type. Visual output related to the touch operation may be provided by using the display screen 140. In some other embodiments, the touch sensor 160K may alternatively be disposed on a surface of the electronic device at a position different from that of the display screen 140.

The optical sensor 160L is configured to sense ambient light brightness. The electronic device may adaptively adjust brightness of the display screen 140 based on the sensed ambient light brightness. The optical sensor 160L may also be configured to automatically adjust white balance during photographing. The optical sensor 160L may further cooperate with the optical proximity sensor 160G to detect whether the electronic device is in a pocket, to prevent an accidental touch.

In this embodiment of this application, the ambient light brightness sensed by the optical sensor 160L may be used as the foregoing illuminance information, and the electronic device processes an image according to a corresponding image output policy with reference to the illuminance information and a target zoom ratio. The illuminance described in this application may also be referred to as brightness or the like.

A software system of the electronic device may use a layered architecture, an event-driven architecture, a microkernel architecture, a microservice architecture, or a cloud architecture. In this embodiment of this application, an Android system with the layered architecture is used as an example to describe a software structure of the electronic device.

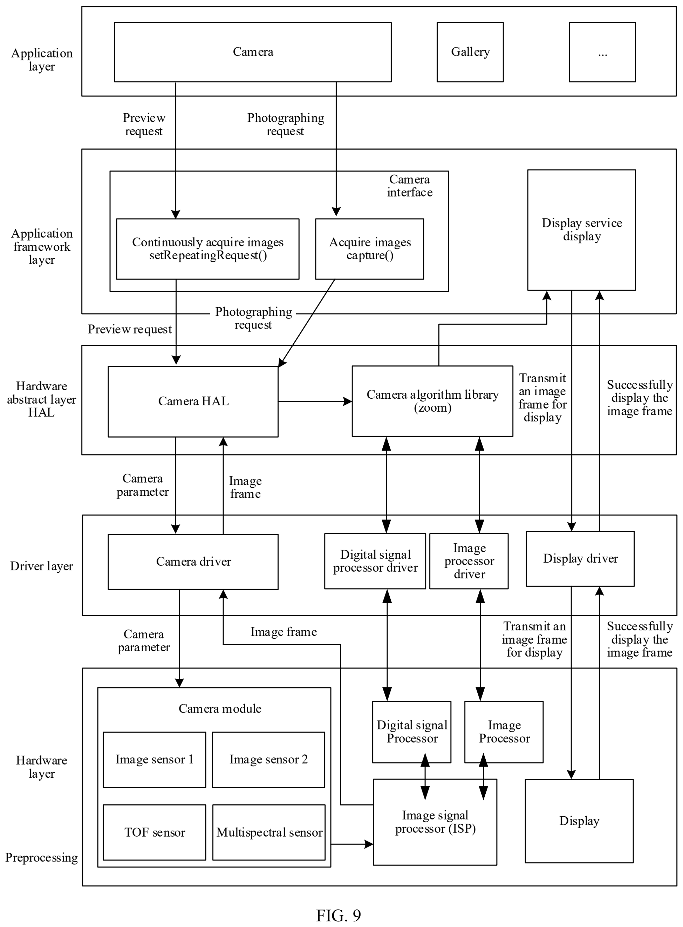

Referring to FIG. 9, FIG. 9 is a schematic diagram of a system architecture of an electronic device according to an embodiment of this application.

As shown in FIG. 9, in a layered architecture, software is divided into several layers, and each layer has a clear role and task. The layers communicate with each other by using a software interface. In some embodiments, the Android system is divided into five layers, which are an application layer, an application framework layer, a hardware abstract layer, a kernel layer, and a hardware layer, respectively, from top to bottom.

The application layer may include a series of application packages. For example, the application packages may include applications such as a camera application and a gallery application.

The camera application may initiate a preview request or a photographing request to a lower layer based on a user operation. Specifically, a continuous image acquisition interface, namely, "setRepeatingRequest ()", in the framework layer may be called to implement a preview function, or an image acquisition interface, namely, "capture ()", in the framework layer may be called to implement a photographing function.

Optionally, the camera application may further include, but is not limited to, the following modules not shown in FIG. 9: a photographing module, a video recording module, a Zoom control module, a UI control module, and the like. The photographing module is configured to execute a photographing function of the camera application. The video recording module is configured to execute a video recording function of the camera application. The Zoom control module is configured to execute a zoom function of the camera application, that is, configured to control, according to a target zoom ratio selected by a user, a Camera HAL to obtain an image according to a corresponding image output policy. The UI control module is configured to control the display module, that is, the display screen 140, to output corresponding content according to a corresponding UI policy, for example, display, after the user adjusts a zoom ratio, an adjusted zoom ratio.

The application framework layer provides an application programming interface (application programming interface, API) and a programming framework for applications at the application layer. The application framework layer includes some predefined functions. For example, the application framework layer may include a camera interface and a display service. The camera interface includes, but is not limited to, setRepeatingRequest (), capture (), and the like.

The camera interface may also be referred to as a camera access interface, a camera service, or the like, and is specifically configured to provide an application programming interface and a programming framework for the camera application.

The display service includes a visual control such as a control for displaying text and a control for displaying a picture. The display interface may be configured to build a display interface of an application, and the display interface may include one or more views.

The hardware abstraction layer (Hardware abstract layer, HAL) is an interface layer between the application framework layer and the kernel layer, and provides a virtual hardware platform for the operating system.

In embodiments of this application, the hardware abstract layer may include a camera hardware abstract layer (Camera HAL) and a camera algorithm library.

The Camera HAL may provide virtual hardware of the camera module. The Camera HAL is mainly configured to control a corresponding sensor to collect scene data, for example, control an image sensor to collect an image, and may further transmit acquired image data, illuminance data, and the like to the camera algorithm library.

The camera algorithm library may include an algorithm module and the neural network described above.

The algorithm module includes several algorithms for processing an image, and may be configured to photograph an image at a target zoom ratio.

The kernel layer is a layer between hardware and software. The kernel layer includes drivers of various hardware.

In some embodiments, the kernel layer may include a camera driver, a digital signal processor driver, an image processor driver, a display driver, and the like.

The camera driver is configured to drive a corresponding sensor of the camera driver to acquire images, the digital signal processor driver is configured to drive the digital signal processor to preprocess the images, and the image sensor driver is configured to drive the image signal processor to process the images.

The hardware layer mainly includes components in the camera module, for example, an image sensor 1, an image sensor 2, a TOF, a multispectral sensor, an image signal processor, a digital signal processor, an image processor, and the like. The sensor 1 and the sensor 2 refer to photosensitive elements in the camera.

The following illustrates operating processes of software and hardware of the electronic device with reference to a photographing scenario.

When the touch sensor 160K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application program framework layer obtains the original input event from the kernel layer, and identifies a control corresponding to the input event. In an example in which the touch operation is a touch/click operation, and a control corresponding to the touch/click operation is a control of a camera application icon. The camera application invokes an interface of the application framework layer to start the camera application, then starts the camera driver by invoking the kernel layer, and captures a static image or a video by using the camera 130.

It should be understood that the steps in the foregoing method embodiments provided in this application may be completed by using an integrated logic circuit of hardware or instructions in a form of software in the processor. The steps of the method disclosed with reference to embodiments of this application may be directly accomplished by a hardware processor, or may be accomplished by a combination of hardware and software modules in the processor.

An embodiment of this application further provides an electronic device. The electronic device may include: a memory and a processor. The memory is configured to store a computer program. The processor is configured to call a computer program in the memory to cause the electronic device to perform the method in any one of the above embodiments.

This application further provides a chip system. The chip system includes at least one processor, configured to implement the functions involved in the method performed by the electronic device in any one of the above embodiments.

In a possible design, the chip system further includes a memory. The memory is configured to store program instructions and data. The memory is located inside or outside the processor.

The chip system may include a chip, or may include a chip and another discrete device.

Optionally, there are one or more processors in the chip system. The processor may be implemented by hardware, or may be implemented by hardware. When implemented by hardware, the processor may be a logical circuit, an integrated circuit, or the like. When the processor is implemented by software, the processor may be a general-purpose processor and implemented by reading software code stored in the memory.

Optionally, there are one or more memories in the chip system. The memory may be integrated with the processor, or the memory and the processor are disposed separately, which is not limited in this embodiment of this application. For example, the memory may be a non-transient processor, such as a read-only memory ROM, which may be integrated with the processor on a same chip or may be disposed on a different chip. A type of the memory and a manner in which the memory and the processor are disposed are not limited in this embodiment of this application.

For example, the chip system may be a field programmable gate array (field programmable gate array, FPGA), may be an application-specific integrated circuit (application specific integrated circuit, ASIC), may be a system on chip (system on chip, SoC), may be a central processing unit (central processor unit, CPU), may be a network processor (network processor, NP), may be a digital signal processing circuit (digital signal processor, DSP), may be a micro controller unit (micro controller unit, MCU), may be a programmable logic device (programmable logic device, PLD), or another integrated chip.

This application further provides a computer program product. The computer program product includes: a computer program (which may also be referred to as code or an instruction). When the computer program is run, the computer is caused to perform the method performed by the electronic device in any one of the above embodiments.

This application further provides a computer-readable storage medium. The computer-readable storage medium stores a computer program (which may also be referred to as code or an instruction). When the computer program is run, the computer is caused to perform the method performed by the electronic device in any one of the above embodiments.

The implementations of this application may be combined arbitrarily to achieve different technical effects.

The foregoing embodiments may be implemented in whole or in part by using software, hardware, firmware or any combination thereof. When the embodiments are implemented by using software, all or some of the embodiments may be implemented in a form of a computer program product. The computer program product includes one or more computer instructions. When the computer program instructions are loaded and executed on a computer, the procedures or functions according to this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, through a coaxial cable, an optical fiber, or a digital subscriber line) or a wireless manner (for example, through infrared rays, radio, or microwave). The computer-readable storage medium may be any usable medium that can be accessed by the computer, or a data storage device, such as a server or a data center in which one or more usable mediums are integrated. The usable medium may be a magnetic medium (for example, a floppy disk, a hard disk, or a magnetic tape), an optical medium (for example, a DVD), a semiconductor medium (for example, a solid state disk (Solid State Disk)), or the like.

Those of ordinary skill in the art may understand that all or some flows of the methods in the above embodiments may be implemented by using a computer program instructing related hardware. The program may be stored in a computer-readable storage medium. When the program is executed, flows of all above method embodiments may be included. The foregoing storage medium includes: any medium that may store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, or improvement made and the like according to the disclosure of the present invention shall fall within the protection scope of the present invention.

## Claims

1. An image processing method, the method being applied to an electronic device comprising an image sensor, and the method comprising:
acquiring a raw image by using the image sensor, a zoom ratio of the raw image being greater than 1×;
performing K×K pixel binning on the raw image at the zoom ratio based on a preset policy, to obtain a first image, K≥1;
wherein the preset policy comprises: when a target zoom ratio is in a first range, K=K1; when the target zoom ratio is in a second range and illuminance is first illuminance, K=K2; when the target zoom ratio is in the second range and the illuminance is second illuminance, K=K3; and a minimum value in the second range is greater than a maximum value in the first range, the first illuminance is greater than the second illuminance, and K2<K3≤K1; and
magnifying the first image to obtain a second image at the target zoom ratio.

2. The method according to claim 1, wherein the preset policy further comprises:
when the target zoom ratio is in a third range, if the illuminance is third illuminance, K=K4, if the illuminance is fourth illuminance, K=K5, and if the illuminance is fifth illuminance, K=K6; and the third range is greater than the second range, the third illuminance is greater than the fourth illuminance, the fourth illuminance is greater than the fifth illuminance, and K4<K5<K6≤K1.

3. The method according to claim 1 or 2, wherein after the obtaining a first image, the method further comprises: converting the first image from a RAW domain into an RGB domain or a YUV domain by using a neural network; and
the magnifying the first image specifically comprises magnifying the first image in any one or more of the following stages: before, during, and after domain conversion on the first image by using the neural network.

4. The method according to claim 3, wherein multi-stage magnification is performed on the first image by using more stages when the target zoom ratio is larger.

5. The method according to claim 3 or 4, wherein the magnifying the first image before domain conversion on the first image by using the neural network comprises: magnifying the first image by using the image sensor, and/or magnifying the first image by using an algorithm.

6. The method according to any one of claims 1 to 5, wherein a pixel format of the raw image is N×NQuad-Bayer, and a pixel format corresponding to the first image is M×MQuad-Bayer, where N≥M, N>1, and M≥1.

7. The method according to claim 6, wherein the zoom ratio of the raw image is N×, and a zoom ratio of the first image is N/K×.

8. The method according to claim 7, wherein the first image is magnified when the target zoom ratio is Z, specifically comprising: magnifying the first image by C×, C=Z/(N/K).

9. The method according to any one of claims 1 to 8, wherein before the obtaining a second image, the method further comprises: cropping the first image before or after the first image is magnified.

10. The method according to any one of claims 1 to 9, wherein before the performing K×K pixel binning on the raw image based on a preset policy, the method further comprises:
detecting the illuminance by using an optical sensor of the electronic device,
or acquiring the illuminance by using an exposure parameter of the image sensor.

11. The method according to any one of claims 1 to 10, wherein before the performing K×K pixel binning on the raw image based on a preset policy, the method further comprises:
receiving a first operation, and setting a zoom ratio of the electronic device to the target zoom ratio in response to the first operation.

12. The method according to any one of claims 1 to 11, wherein the method further comprises: displaying a preview interface, and displaying the second image in the preview interface.

13. The method according to any one of claims 1 to 11, wherein
the raw image comprises a plurality of frames of images, and the first image is: a frame of image obtained by fusing the plurality of frames of images on which K×K pixel binning is performed based on the preset policy; and
the method further comprises: receiving a photographing operation before the performing K×K pixel binning on the raw image based on a preset policy; and saving the second image, displaying a gallery interface, and displaying the second image in the gallery interface.

14. An electronic device, the electronic device comprising an image sensor, one or more memories, and one or more processors, wherein the memory is coupled to the one or more processors, the memory is configured to store computer program code, the computer program code comprises a computer instruction, and the one or more processors call the computer instruction to cause the electronic device to perform the method according to any one of claims 1 to 13.

15. A computer-readable storage medium, comprising an instruction, wherein when the instruction is run on an electronic device, the electronic device is caused to perform the method according to any one of claims 1 to 13.

16. A chip, the chip being applied to an electronic device, wherein the chip comprises one or more processors, and the processor is configured to call computer instructions to cause the electronic device to perform the method according to any one of claims 1 to 13.

17. A computer program product comprising instructions, wherein when the computer program product is run on an electronic device, the electronic device is caused to perform the method according to any one of claims 1 to 13.
